# EUROPÄISCHE PATENTSCHRIFT

(11) **EP 1 025 501 B1**
(45) Veröffentlichungstag und Bekanntmachung des Hinweises auf die Patenterteilung: **03.04.2002**
(21) Anmeldenummer: 98954451.5
(22) Anmeldetag: 27.10.1998
(51) Int. Cl.: G06F 11/273

(54) **VERFAHREN UND VORRICHTUNG ZUR ÜBERPRÜFUNG EINER FEHLERÜBERWACHUNG EINER SCHALTUNG**
METHOD AND DEVICE FOR CHECKING AN ERROR CONTROL PROCEDURE OF A CIRCUIT
PROCEDE ET DISPOSITIF POUR CONTROLER UNE PROCEDURE DE SURVEILLANCE D'ERREURS D'UN CIRCUIT

(30) Priorität: 29.10.1997 DE 19747721; 31.01.1998 DE 19803824
(43) Veröffentlichungstag der Anmeldung: 09.08.2000
(73) Patentinhaber: Continental Teves AG & Co. oHG, 60488 Frankfurt (DE)
(72) Erfinder: LINK, Leonard, D-61118 Bad Vilbel (DE); FEY, Wolfgang, D-65527 Niedernhausen (DE)
(74) Vertreter: Blum, Klaus-Dieter
(86) Internationale Anmeldenummer: EP9806802
(87) Internationale Veröffentlichungsnummer: WO9922298

(56) Entgegenhaltungen:
- DE-A- 3 728 561
- CHARPENTIER P: "LE CHIEN DE GARDE APPLIQUE AU MICROPROCESSEUR" ELECTRONIQUE, Nr. 24, 1. Januar 1993, Seiten 53-59, XP000334926

## Beschreibung

Die Erfindung betrifft ein Verfahren und eine Vorrichtung zur Überprüfung einer Fehlerüberwachung einer Schaltung.

Für viele digitale Schaltungen ist eine zuverlässige Überprüfung ihrer Funktionstüchtigkeit außerordentlich wichtig. Beispielsweise müssen solche digitalen Schaltungen zuverlässig in ihrer Betriebstüchtigkeit erkannt werden, die in sicherheitsrelevanten Schaltungen arbeiten, beispielsweise in Steuerungs- oder Regelungseinrichtungen, etwa im Automobilbau. Digitale Schaltungen haben deshalb häufig Fehlerüberwachungseinrichtungen, die die Arbeitsweise der digitalen Schaltung beobachten und beim Vorliegen bzw. Eintreten eines einen Fehler anzeigenden Zustands ein Fehlersignal abgeben. Beispielsweise können redundante Komponenten auf Synchronlauf überwacht werden, und ein Fehlersignal würde entstehen, wenn die Daten in den redundanten Komponenten nicht gleich zueinander sind. Genausogut können Signale an einzelnen Schaltungspunkten abgegriffen werden und auf unerlaubte Zustände abgefragt werden oder ähnliches. Die Fehlerüberwachung kann auch Signale auf Verbindungsleitungen, beispielsweise auf einem Systembus, überwachen und bei einen Fehler anzeigenden Zuständen ein Fehlersignal abgeben.

Da Fehler in digitalen Schaltungen vergleichsweise selten entstehen, werden entsprechende Fehlerüberwachungseinrichtungen vergleichsweise selten tätig werden. Insofern ist praktisch nicht nachprüfbar, ob die Fehlerüberwachung ihrerseits richtig arbeitet.

In der Zeitschrift Electronique, Nr. 24, Jan. 93, S. 53-59 ist ein Verfahren zur automatischen Kontrolle der Ausführung einer Befehlsfolge in einem Mikroprozessor beschrieben, bei dem die Dauer der Ausführung der Befehlsfolge bestimmt und mit einer vorbestimmten Referenzdauer verglichen wird. Für die Bestimmung der Ausführungsdauer der Befehlsfolgen ist eine externe Schaltung WD vorgesehen, die einen Impuls zur Rückstellung erhält. Wenn die Ausführungsdauer zu lang oder zu kurz ist, wird der Rückstellimpuls nicht, zu früh oder zu spät erzeugt, eine Abweichung der Ausführungszeit gegenüber der Referenzdauer kann dann erkannt und das Vorliegen eines Fehlers somit angezeigt werden. Für dieses Verfahren wird ferner eine Testroutine beschrieben, um die Funktionstüchtigkeit der Schaltungen zu prüfen. Zu diesem Zweck werden mit Hilfe einer Software Rückstellimpulse zur Schaltung WD unterdrückt, wodurch sich die Programmablaufdauer unzulässig verlängert. Dann wird kontrolliert, ob dadurch ein Fehler erfaßt werden kann. Damit dieser "absichtliche" Fehler von außen nicht als tatsächlicher Fehler ausgelegt wird, ist es vorgesehen, daß dann einerseits erneut ein Rückstellimpuls abgegeben wird und andererseits eine Filterung mit Hilfe einer Filtervorrichtung erfolgt, damit erst aufgrund eines als relevant erkannten Fehlers ein Fehlersignal erzeugt wird.

Aufgabe der Erfindung ist es, ein Verfahren und eine Vorrichtung zur Überprüfung einer Fehlerüberwachung anzugeben, die einfach gestaltet sind und verschiedene Fehlerbedingungen erfassen können.

Diese Aufgabe wird mit den Merkmalen der unabhängigen Ansprüche gelöst. Abhängige Ansprüche sind auf bevorzugte Ausführungsformen der Erfindung gerichtet.

Bevor nachfolgend bezugnehmend auf die Zeichnungen einzelne erfindungsgemäße Ausführungsformen beschrieben werden, sei zur Vermeidung begrifflicher Schwierigkeiten die in dieser Anmeldung verwendete Terminologie erläutert. Die eingangs erwähnte, sicherheitsrelevant eingesetzte und in ihrer Betriebssicherheit zu überprüfende Schaltung wird als "Schaltung" bzw. "digitale Schaltung" bezeichnet. Wenn sie nicht richtig arbeitet, wird dies als "Fehler" bezeichnet. Die Schaltung wird durch eine "Fehlerüberwachung(seinrichtung)" überwacht. Wenn ein Fehler vorliegt, gibt die Fehlerüberwachung ein "Fehlersignal" aus. Erfindungsgemäß wird dieses Fehlersignal bzw. die es erzeugende Fehlerüberwachung durch ein "Verfahren zur Überprüfung" bzw. eine "Vorrichtung zur Überprüfung" auf richtige Arbeitsweise überprüft. Gleich hier wird darauf hingewiesen, daß einerseits die überwachte Schaltung und andererseits die Fehlerüberwachung nicht notwendigerweise diskret und damit getrennt aufgebaut sein müssen. Sie können Komponenten beispielsweise eines Mikroprozessors sein, so daß sie möglicherweise physisch nicht unterscheidbar sind. Jedenfalls aber gibt die Fehlerüberwachung beim Vorliegen eines einen Fehler der Schaltung anzeigenden Zustands das erwähnte Fehlersignal ab, wobei erfindungsgemäß die Fehlerüberwachung überprüft wird. Führt die erfindungsgemäße Überprüfung der Fehlerüberwachung zu dem Ergebnis, daß die Fehlerüberwachung ihrerseits fehlerhaft ist (weil sie das Fehlersignal nicht oder nicht richtig abgibt), erzeugt die erfindungsgemäße Überprüfungsvorrichtung bzw. das erfindungsgemäße Überprüfungsverfahren ein "Alarmsignal".

Bezugnehmend auf die Zeichnungen werden nun erfindungsgemäße Ausführungsformen beschrieben, es zeigen
- Fig. 1: ein Blockschaltbild der erfindungsgemäß vorgesehenen Komponenten,
- Fig. 2: ein genaues Schaltbild der erfindungsgemäßen Überprüfungsvorrichtung,
- Fig. 3: ein Schaltbild einer Impulsformschaltung für das Fehlersignal,
- Fig. 4: Signalverläufe in den Schaltungen der Figuren 2 und 3, und
- Fig. 5: eine Beobachtungsschaltung.

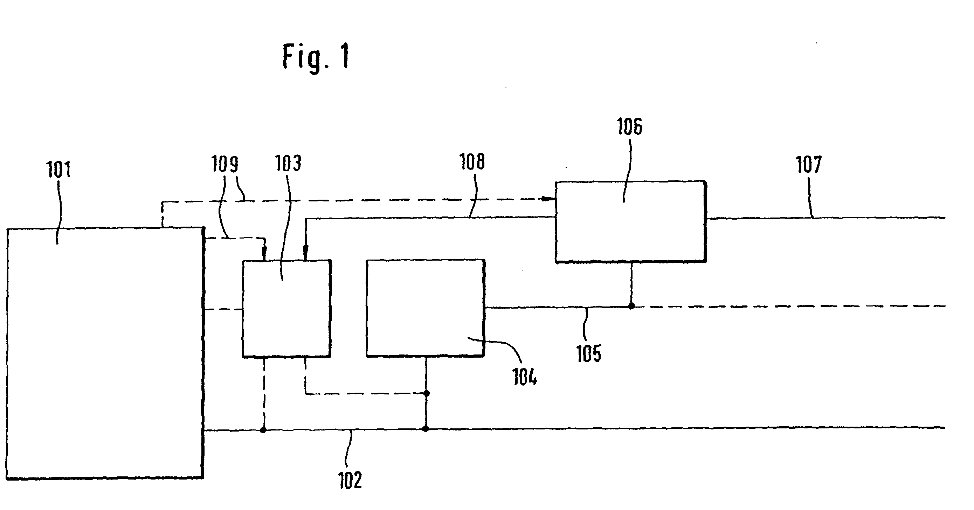

Fig. 1 zeigt ein Blockschaltbild einzelner Komponenten. 101 ist die in ihrer Arbeitsweise zu überprüfende Schaltung. Vorzugsweise handelt es sich um eine digitale Schaltung, die beispielsweise über eine Signalleitung 102 mit anderen Komponenten kommunizieren kann. 101 kann aber auch eine analoge Schaltung sein. 103 ist eine Einrichtung zum Hervorrufen eines einen Fehler anzeigenden Zustands. Die Einrichtung 103 kann auf die Schaltung 101 oder auf die Signalleitung 102 einwirken und dort Zustände hervorrufen, die von der Fehlerüberwachung 104 als Fehler erkannt werden müßten. Die Einrichtung 103 kann ihrerseits eine digitale oder analoge Einrichtung sein. Sie kann einen fehlerhaften Betrieb der Schaltung 101 selbst provozieren, oder sie kann mehr oder minder direkt den Eingang der Fehlerüberwachung 104 ansprechen. Die Fehlerüberwachung 104 überwacht die Schaltung 101 auf korrekte Arbeitsweise, indem sie Ausgangssignale und/oder interne Schaltungspunkte abfragt und auf unerlaubte Zustände oder auch Zeitverläufe überprüft. Fig. 1 kann beispielsweise ein System sein, in dem 101 ein Prozessor ist, 102 ein Bus und 104 eine an den Bus angeschlossene Fehlerüberwachungseinrichtung.

Genauso sind aber auch Aufbauten innerhalb eines einzigen Chips möglich. Auch die Fehlerüberwachung 104 kann analog arbeiten. Vorzugsweise sind aber die Komponenten 101 bis 104 digitale Komponenten.

Liegt ein einen Fehler anzeigender Zustand vor (entweder tatsächlich oder provoziert durch die Einrichtung 103), gibt die Fehlerüberwachungseinrichtung 104 bei richtiger Arbeitsweise ihrerseits ein Fehlersignal 105 ab.

Weiterhin ist eine Überprüfungsvorrichtung 106 vorgesehen. Zusammen mit der Einrichtung 103 kann sie die Funktion der Fehlerüberwachung überprüfen. Bei dem erfindungsgemäßen Verfahren ruft die Einrichtung 103 mittelbar oder unmittelbar einen einen Fehler anzeigenden Zustand hervor. Dieser Zustand muß bei korrekter Arbeitsweise von der Überwachungseinrichtung 104 erkannt werden, so daß nach Hervorrufen des den Fehler anzeigenden Zustands durch die Einrichtung 103 die Überprüfungseinrichtung 104 ein Fehlersignal abgeben muß. Dies wird durch die Überprüfungsvorrichtung 106 überprüft. Wird das Fehlersignal 105 auf das Hervorrufen des den Fehler anzeigenden Zustands hin erzeugt, wird kein Alarmsignal 107 ausgegeben. Wird dagegen das Fehlersignal 105 nicht oder nicht richtig oder nicht zum richtigen Zeitpunkt ausgegeben, gibt die Überprüfungseinrichtung 106 das Alarmsignal 107 aus.

Vorzugsweise erfolgt das Hervorrufen des den Fehler anzeigenden Zustands innerhalb einer Torzeit, wobei die Torzeit so bemessen ist, daß in ihr auch das richtig erzeugte Fehlersignal 105 erscheinen muß.

Zur Koordination von Überprüfungsvorrichtung 106 und Einrichtung 103 zum Hervorrufen des den Fehler anzeigenden Zustands können Signalleitungen 108 zwischen ihnen vorgesehen sein, über die beispielsweise ein die Torzeit anzeigendes digitales Signal ausgetauscht werden kann. Die Komponenten können aber auch beispielsweise durch die Schaltung 101 über Signalleitungen 109 koordiniert werden.

Auch hier wird nochmals darauf hingewiesen, daß die bisher angesprochenen Komponenten nicht diskret vorgesehen sein müssen. Fig. 1 kann als Darstellung von Funktionen verstanden werden, die innerhalb einer Schaltung, innerhalb eines Chips durch Hardware oder teilweise auch durch Software implementiert sein können. Vorzugsweise aber ist die erfindungsgemäße Überprüfungsvorrichtung 106 eine digitale Schaltung, während Schaltung 101, Einrichtung 103 und Überwachungseinrichtung 104 analoge Schaltungen sein können.

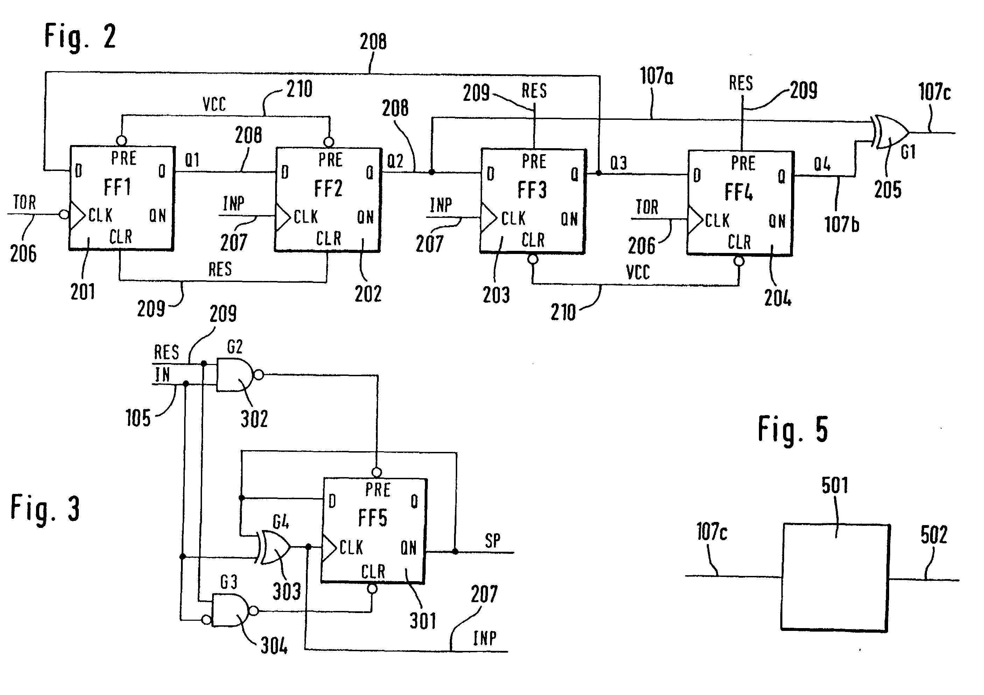

Bezugnehmend auf Fig. 2 wird eine konkrete, durch Hardware gebildete Ausführungsform der Überprüfungsvorrichtung 106 beschrieben. Fig. 2 zeigt vier D-Flip-Flops 201 bis 204. Drei von ihnen (201 bis 203) sind ringförmig derart verschaltet, daß der Q-Ausgang des einen Flip-Flops jeweils am D-Eingang des anderen Flip-Flops liegt. Die ringförmige Verschaltung erfolgt über die Leitungen 208.

Die D-Flip-Flops sind Kippschaltungen, die den am D-Eingang anliegenden digitalen Zustand dann übernehmen, wenn an ihrem Takteingang CLK z.B. eine steigende Flanke eines digitalen Signals auftritt. Durch Preset-Eingänge PRE und Clear-Eingänge CLR kann ein D-Flip-Flop nach Maßgabe externer Signale unabhängig vom Takteingang CLK in seinem Ausgang Q auf entweder logisch 1 oder logisch 0 gesetzt werden.

Um die erfindungsgemäße Überprüfung des Fehlersignals durchführen zu können, werden die ringförmig verschalteten Flip-Flops 201 bis 203 einerseits durch unterschiedliche Taktsignale getaktet (= zum Übernehmen des Signals am D-Eingang auf den Q-Ausgang veranlaßt), und sie werden in bestimmter Weise initialisiert. Eines der Flip-Flops (201, nachfolgende als erstes Flip-Flop bezeichnet) wird zu Beginn der Torzeit und insbesondere durch eine geeignete Flanke des die Torzeit anzeigenden Signals 206 getaktet. Die danach folgenden Flip-Flops (202, 203, nachfolgend als zweites und drittes Flip-Flop bezeichnet) werden nach Maßgabe des Fehlersignals 105 durch ein Signal 207 getaktet. Das Torzeitsignal 206 kann ein digitales Signal sein, das mit dem einen Zustand den Zeitraum innerhalb der Torzeit und mit dem anderen Zustand den Zeitraum außerhalb der Torzeit anzeigt. Das erste Flip-Flop 201 wird durch das Torzeitsignal 206 so angesteuert, daß das Flip-Flop 201 zu Beginn der Torzeit das Eingangssignal übernimmt.

Das Fehlersignal 105, das durch die Überprüfungsvorrichtung zu überprüfen ist, kann beispielsweise ein bistabiles Signal sein, das bei jedem Fehler (realer oder provozierter Fehler) seinen Zustand einmal ändert und damit zu einer steigenden oder fallenden Flanke führt. Eine Flanke zeigt dann einen Fehler an. Das zweite und das dritte D-Flip-Flop 202, 203 werden so angesteuert, daß sie bei jedem Fehler den Zustand an ihrem D-Eingang an den Q-Ausgang übernehmen. Wenn das Fehlersignal 105 das bistabile Signal ist und die D-Flip-Flops nur auf steigende Flanken reagieren, muß durch eine geeignete Signalaufbereitung sichergestellt werden, daß jede Flanke (steigend oder fallend) des Fehlersignals 105 zu einer steigenden Flanke zur Triggerung der Takteingänge CLK des zweiten und des dritten D-Flip-Flops 202, 203 führt. Dies kann beispielsweise durch eine Signalaufbereitungsschaltung nach Fig. 3 erfolgen. Diese Schaltung, deren Funktion später erläutert wird, empfängt das eigentliche Fehlersignal 105 und gibt ein Taktsignal 207 für die D-Flip-Flops 202, 203 aus.

Die Ausführungsform nach Fig. 2 weist außerdem eine Initialisierungseinrichtung 209, 210 auf, die die Zustände der einzelnen Flip-Flops anfänglich in geeigneter Weise setzt. Die Initialisierungseinrichtung 209, 210 sind Signale bzw. Verbindungen, die auf die Preset-Eingänge bzw. Clear-Eingänge der Flip-Flops einwirken. Die Flip-Flops werden anfänglich so gesetzt, daß das dritte Flip-Flop 203 am Ausgang Q3 den einen digitalen Pegel (0 oder 1) hat, während die anderen zwei Flip-Flops 201, 202 so gesetzt werden, daß sie den entsprechend anderen digitalen Pegel (1 oder 0) haben. Das später zu erläuternde vierte D-Flip-Flop 4 wird durch die Initialisierungseinrichtung 209, 210 auf den gleichen Wert gesetzt wie das dritte D-Flip-Flop 203.

Die Ausführungsform nach Fig. 2 ist so gestaltet, daß das zu überprüfende Signal - das Fehlersignal 105 - die Schaltung taktet. Die Schaltung ist so gestaltet, daß, solange das Fehlersignal 105 in richtiger Weise erzeugt wird, der anfänglich eingestellte Zustand, wonach Q3 einen anderen Pegel hat als Q1 und Q2, erhalten bleibt, weil er durch die schleifenförmige Struktur (D-Flip-Flops 202-203 und Leitungen 208) nicht "vergessen" wird. Das gewünschte Alarmsignal wird am Ausgang Q2 des zweiten Flip-Flops 202 und/oder am Ausgang Q3 des dritten Flip-Flops 203 abgegriffen.

In der Ausführungsform der Fig. 2 wird der Ausgang Q3 des dritten Flip-Flops 203 auf den D-Eingang eines vierten Flip-Flops 204 gegeben. Dieses vierte Flip-Flop 204 wird zum Ende der Torzeit getaktet. Sein Ausgang wird mit dem Ausgang Q2 des zweiten Flip-Flops EXOR-verknüpft. Dadurch ergibt sich das Alarmsignal 107c.

Nachfolgend wird die Wirkungsweise der Schaltung in verschiedenen Betriebszuständen beschrieben. Die Fehlerüberwachung 104 kann einerseits richtig arbeiten, dann wird beim Erscheinen eines einen Fehler anzeigenden Zustands ein Fehlersignal ausgegeben. Es können aber auch unrichtige Betriebsweisen auftreten, nämlich
- es erscheint kein Fehlersignal,
- es erscheinen mehrere Fehlersignale.

Die zuletzt genannte Möglichkeit kann verschiedene Ausgestaltungen haben: Das einem ersten Fehlersignal folgende weitere Fehlersignal kann innerhalb oder außerhalb der Torzeit liegen. Außerdem muß das weitere Fehlersignal nicht unbedingt auf eine Fehlfunktion der Fehlerüberwachung zurückzuführen sein. Vielmehr kann es einen tatsächlichen (nicht provozierten) Fehler der Schaltung 101 anzeigen.

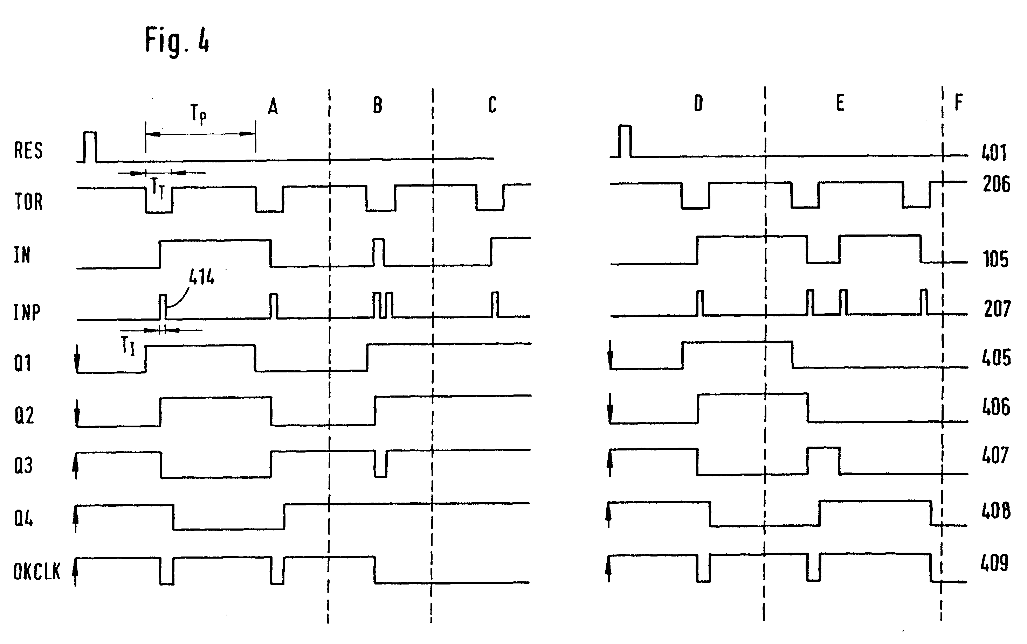

Nachfolgend wird bezugnehmend auf die Figuren 4 und 2 der Betrieb der Ausführungsform nach Fig. 2 beschrieben. Das erfindungsgemäße Überprüfungsverfahren wird wiederholt, beispielsweise periodisch in Zeitabständen T_{P} ausgeführt. Vor dem Beginn dieser wiederholten Ausführung wird die Schaltung initialisiert. Hierzu werden durch einen geeigneten Impuls RES 401 die vorhandenen D-Flip-Flops wie oben beschrieben gesetzt. Anschließend wird beispielsweise periodisch mit Periodendauer T_{P} eine Torzeit gesetzt, die durch das TorzeitSignal TOR 206 angezeigt wird. Die Torzeit T_{T} ist kürzer als die Periodendauer T_{P}. Die zeitliche Lage der Torzeit (logisch 0 in Signal 206) wird so gewählt, daß in ihr das Fehlersignal, das durch die Einrichtung 103 "provoziert" wird, erscheinen muß. Vorzugsweise wird zu Beginn der Torzeit durch die Einrichtung 103 der den Fehler anzeigende Zustand hervorgerufen, so daß kurz danach das Fehlersignal 105 auftreten müßte. Das Fehlersignal 105 ist als Signal IN in Fig. 4 gezeigt. Wie oben beschrieben ist es in dieser Ausführungsform ein bistabiles Signal, das bei einem Fehler sich einmal ändert.

Die Impulsformschaltung aus Fig. 3 wandelt das Signal IN 105 in das Signal INP 207 um. Pro Flanke (steigend oder fallend) des Signals IN 105 hat das Signal INP 207 einen Impuls 414 mit je einer steigenden und fallenden Flanke. Damit können Flip-Flops angesteuert werden, die nur auf eine der beiden Flanken (steigend oder fallend) ansprechen. Zweck der Impulsformschaltung ist es somit allgemein, pro Fehler eine Taktung der Flip-Flops zu bewirken. Wenn das Fehlersignal schon entsprechend gestaltet ist oder die Flip-Flops beispielsweise auf steigende und fallende Flanken reagieren, kann die Impulsformschaltung nach Fig. 3 entfallen.

Flip-Flop 1 wird zu Beginn der Torzeit getriggert. Es übernimmt dadurch den Pegel an seinem D-Eingang. Im gezeigten Beispiel springt der Ausgang dann von 0 auf 1. Etwas später tritt das Fehlersignal IN 105 und das davon abgeleitete Impulssignal INP 207 mit dem Impuls 414 auf, es triggert/ taktet Flip-Flops 202 und 203, so daß diese jeweils ihre Eingänge an den Ausgang weiterschalten. Flip-Flop 202 übernimmt daher den 1-Pegel an seinem Ausgang, und Flip-Flop 3 übernimmt den (vorher vorhandenen) 0-Pegel an seinem Ausgang. Da die Flip-Flops 202 bis 204 lediglich auf eine Flanke reagieren (in der gezeigten Ausführungsform die steigende), passiert zum Ende der Torzeit bzw. zum Ende des Impulses 414 nichts. Die Zeitdauer T_{I} des Impulses 414 ist vorzugsweise so gewählt, daß sie kürzer ist als die Torzeit. Durch die oben beschriebenen Vorgänge ist ein einmaliger Überprüfungsvorgang bei richtiger Arbeitsweise der Fehlerüberwachung abgeschlossen. Das Ergebnis ist, daß sich die Ausgänge Q1 bis Q3 in ihrem logischen Pegel geändert haben. Gleichwohl ist der anfänglich initialisierte Zustand, wonach Flip-Flop 3 einen Ausgangspegel hat, der sich von denen von Flip-Flop 1 und Flip-Flop 2 unterscheidet, erhalten. Nach einer weiteren Torzeit drehen sich die Verhältnisse abermals um, und der durch die Initialisierung eingestellte Zustand liegt wieder vor. Bei richtiger Arbeitsweise der Fehlerüberwachung wechseln sich die genannten Zustände demnach ab, und der alarmfreie Zustand wird damit durch ein Signal angezeigt, in dem sich die Ausgänge der Flip-Flops, insbesondere des zweiten und des dritten Flip-Flops 202, 203 regelmäßig ändern. Die beschriebenen Verhältnisse sind im Teil A der Fig. 4 gezeigt.

Teil B in Fig. 4 zeigt den Fall, daß kurz hintereinander zwei Fehlersignale auftreten. Die Schaltung verhält sich hier zunächst so wie weiter oben besprochen. Beim Auftreten des zweiten Fehlersignals (fallende Flanke im Signal IN in Fig. 4, B, bzw. zweiter Impuls im Signal INP in Fig. 4, B, übernehmen jedoch abermals die Flip-Flops 202 und 203 ihre jeweiligen Eingangswerte an ihren Ausgang. Da hier jedoch (wegen des nicht vorhandenen Torzeit-Taktes) der einzig unterschiedliche Pegel bei Q3 nicht an Q1 weitergegeben wurde, wird der "unterschiedliche" Zustand vergessen, weil Q3 und Q2 jeweils mit dem Pegel 1 überschrieben werden. Dadurch haben alle Ausgänge Q1, Q2 und Q3 den gleichen logischen Wert 1, der sich auch durch nachfolgende Taktungen nicht mehr ändern kann. Es entsteht dadurch ein konstantes Ausgangssignal, auch nach weiteren Taktungen.

Ein in den Figuren nicht gezeigter Fall ist das Ausbleiben eines Fehlersignals IN 105. Dies hat zur Folge, daß die Flip-Flops 202, 203 nicht getaktet werden. Unabhängig davon, was Flip-Flop 201 macht, bleiben die Ausgänge Q2 und Q3 der Flip-Flops 202, 203 auf konstantem Pegel.

Das vierte Flip-Flop 204 ist vorgesehen, um die Fälle festzustellen, in denen ein Fehlersignal (Flanke im Signal IN 105 bzw. Impuls 414 im Signal INP 207) nach dem Ablauf der Torzeit eintrifft. Nach dem Initialisieren hat Q4 den Wert 1 und das EXOR-Gatter 205 den Wert 1. Ändert sich nach Beginn der Torzeit der Pegel des Fehlersignals IN 105, nimmt Q2 den Wert 1 an, und EXOR-Gatter 205 geht auf 0. Am Ende der Torzeit (steigende Flanke des Torzeit-Signals TOR 206) übernimmt das vierte Flip-Flop 204 den Wert 0 an seinen Ausgang, und Gatter 205 wechselt von 0 auf 1. Dadurch ändert sich der Pegel. Bleibt dagegen ein Wechsel des Fehlersignals IN 105 während der Torzeit aus, ändert sich der Ausgangspegel des Gatters 205 nicht, so daß abermals durch ein konstantes Signal ein ungünstiges Überprüfungsergebnis angezeigt wird. Wechselt das Fehlersignal IN 105 während der Torzeit mehrfach, wird Q3 am Ende der Torzeit nach Q4 übernommen, so daß sich der Ausgang des Gatters 205 nicht ändert und das Signal 107c abermals konstant bleibt.

Läuft schließlich ein Fehlersignal nach Ende der Torzeit ein (Fall E in Fig. 4), übernimmt abermals Q3 den Wert von Q2, ohne daß vorher der einzig unterschiedliche Ausgangswert von Q3 in Q1 gesichert worden wäre. Dadurch hat die Schleife die unterschiedliche Gestaltung der Ausgangspegel "vergessen", und beim nachfolgenden Überprüfungsdurchlauf (nächste Torzeit) findet abermals kein Pegelwechsel an den Ausgängen Q1 bis Q3 statt, so daß durch ein konstantes Ausgangssignal ein Alarm angezeigt wird.

Die Ausführungsform der Fig. 2 ist so gestaltet, daß sie das Fehlersignal 105 und das Alarmsignal 107 derart zusammenfaßt, daß insgesamt lediglich das Alarmsignal 107 ausgegeben wird. Es zeigt einen Alarm sowohl dann an, wenn die Fehlerüberwachung 104 nicht richtig arbeitet, als auch dann, wenn die Fehlerüberwachung 104 richtig arbeitet und einen Fehler der Schaltung 101 feststellt. Der letztgenannte Fall entspricht dabei den Fällen, in denen mehrere Fehlersignale auftreten. In jedem Fall (beide Fehlersignale innerhalb der Torzeit oder eines innerhalb und das andere außerhalb der Torzeit), wird ein Alarmsignal generiert. Für den unwahrscheinlichen Fall, daß ein auf einem tatsächlichen Fehler beruhendes Fehlersignal mit einem provozierten Fehlersignal zeitlich zusammenfällt, kann davon ausgegangen werden, daß das tatsächliche Fehlersignal später nochmals entsteht, so daß es später abermals erfaßt werden kann. Bei dieser Ausführungsform ist es nicht notwendig, die durch den durch die Einrichtung 103 ausgelösten provozierten Fehler hervorgerufene Fehlermeldung/Fehlersignal 105 als "nur provoziert" herauszufiltern. Im Alarmsignal 107 taucht der provozierte Fehler nicht auf.

In der Ausführungsform der Fig. 2 bedeutet demnach ein sich wiederholt änderndes Signal auf der Leitung 107c den fehlerfreien Betrieb, während ein über längere Zeit konstantes Signal eine Alarmbedingung bedeutet, wobei diese Alarmbedingung entweder Fehler in der Schaltung 101 oder Fehler in der Fehlerüberwachung 104 bedeuten kann. Eine Unterscheidung dieser beiden Fehler ist nicht notwendig, da in jedem Fall die Schaltung insgesamt zu überprüfen ist.

Um zu einem einfacher handhabbaren Alarmsignal 107 zu kommen, kann das Signal 107c (Ausgang des EXOR-Gatters 205) beispielsweise an eine Signalbeobachtungsschaltung 501 (Fig. 5) angelegt werden. Die Schaltung kann nach Art einer "Watchdog"-Schaltung ausgebildet sein. Sie gibt am Ausgang 502 so lange den einen Pegel aus, so lange sie am Eingang 107c ein sich regelmäßig änderndes Signal empfängt. Bleibt die regelmäßige Änderung dagegen aus, geht sie vom einen auf den anderen Zustand über, wobei dieser andere Zustand dann ein weiteres Alarmsignal darstellt. Dadurch kann durch einfache Betrachtung des Pegels des Signals 502 auf das Vorliegen bzw. Nichtvorliegen eines Alarms/Fehlers geschlossen werden. Die Zeitkonstanten der "Watchdog"-Schaltung werden vorzugsweise so gestaltet, daß rechtzeitige Pegeländerungen als "gut" und ausbleibende und/oder verfrühte und/oder verspätete Pegeländerungen als "schlecht" erkannt werden.

Die Impulsformschaltung 301 bis 304 in Fig. 3 arbeitet wie folgt: Zu Beginn der Signalüberprüfung wird in Initialisierungsschritt die Schaltung mittels des Reset-Signals RES 401 zurückgesetzt. Flip-Flop 301 dient zusammen mit dem Gatter 303 als Flankendetektor. Jede Änderung am Eingang IN (steigende und fallende Flanke) erzeugt am Ausgang INP einen Impuls 414. Der invertierte Ausgang QN des Flip-Flops wird durch das Reset-Signal RES 401 auf den gleichen Pegel wie das Eingangssignal IN 105 gebracht. Ausgang INP 207 hat durch die EXOR-Verknüpfung 303 den Wert 0. Ändert das Eingangssignal/Fehlersignal IN 105 seinen Pegel, entsteht am Ausgang INP 207 eine steigende Flanke, die das Flip-Flop 301 taktet. Das Flip-Flop 301 ist als Frequenzteiler geschaltet, und der invertierende Ausgang QN wechselt seinen Wert. Damit hat das EXOR-Gatter 303 wieder zwei gleiche Eingangspegel, und sein Ausgang INP 207 kehrt auf 0 zurück.

## Patentansprüche

1. Verfahren zur Überprüfung einer Fehlerüberwachung in einer Schaltung, wobei die Fehlerüberwachung bei richtiger Arbeitsweise ihrerseits ein Fehlersignal (105) ausgibt, wenn die digitale Schaltung einen einen Fehler anzeigenden Zustand einnimmt,
**gekennzeichnet durch** die Schritte
Hervorrufen des den Fehler anzeigenden Zustandes,
Überprüfen des Fehlersignals (105), und
Erzeugen eines Alarmsignals (107), wenn das Fehlersignal (105) nicht oder nicht richtig erscheint,
wobei der den Fehler anzeigende Zustand innerhalb einer Torzeit hervorgerufen wird, das Fehlersignal (105) innerhalb der Torzeit überprüft wird, und das Alarmsignal (107) erzeugt wird, wenn das Fehlersignal (105) innerhalb der Torzeit nicht oder nicht richtig erscheint.

2. Vorrichtung zur Überprüfung einer Fehlerüberwachungseinrichtung (104) einer Schaltung (101), wobei die Fehlerüberwachungseinrichtung (104) bei ihrer richtigen Arbeitsweise ein Fehlersignal (105) ausgibt, wenn die Schaltung (101) einen einen Fehler anzeigenden Zustand einnimmt oder ausgibt,
**gekennzeichnet durch** die folgenden Komponenten:
eine Einrichtung zum Hervorrufen eines einen Fehler anzeigenden Zustandes (103), und
eine Einrichtung (106) zum Überprüfen des Fehlersignals (105), nachdem ein den Fehler anzeigender Zustand hervorgerufen wurde, und zum Erzeugen eines Alarmsignals (107), wenn das Fehlersignal (105) auf das Hervorrufen des den Fehler anzeigenden Zustandes hin nicht oder nicht richtig erscheint,
wobei die Überprüfungseinrichtung (106) das Fehlersignal (105) innerhalb einer Torzeit, innerhalb der der den Fehler anzeigende Zustand hervorgerufen wird, überprüft und das Alarmsignal (107) erzeugt, wenn das Fehlersignal innerhalb der Torzeit nicht oder nicht richtig erscheint.

3. Vorrichtung nach Anspruch 2,
**gekennzeichnet durch** ein digitales Torzeitsignal (206), dessen einer Zustand die Torzeit anzeigt.

4. Vorrichtung nach Anspruch 3, **gekennzeichnet durch** ein digitales Torzeitsignal (206), dessen einer Zustand eine Torzeit anzeigt, innerhalb derer der den Fehler anzeigende Zustand hervorgerufen wird, wobei die Überprüfungseinrichtung (106) das Fehlersignal (105) innerhalb der Torzeit überprüft und das Alarmsignal (107) erzeugt, wenn das Fehlersignal innerhalb der Torzeit nicht oder nicht richtig erscheint.

5. Vorrichtung nach Anspruch 4, **gekennzeichnet durch** eine ringförmige Verschaltung (208) mehrerer D-Flipflops (201 - 203), die **durch** Torzeitsignale (206) oder **durch** ein Signal nach Maßgabe des Fehlersignals (207) getaktet werden.

6. Vorrichtung nach Anspruch 5, **gekennzeichnet durch** eine Initialisierungseinrichtung (209, 210), die jeweils den Ausgang eines D-Flipflops in der ringförmigen Verschaltung(201 - 203) anfänglich so setzt, daß nicht alle D-Flipflops in der Ringschaltung den gleichen digitalen Pegel (1 oder 0) haben.

7. Vorrichtung nach Anspruch 5 oder 6, **dadurch gekennzeichnet, daß** drei D-Flipflops (201 - 203) ringförmig verschaltet sind, von denen ein erstes (201) nach Maßgabe des Torzeit-Signals (206) und ein zweites (202) und ein drittes (203) nach Maßgabe des Fehlersignals (105) getaktet werden.

8. Vorrichtung nach Anspruch 7, **dadurch gekennzeichnet, daß** das erste und das zweite D-Flipflop (201, 202) durch die Initialisierungseinrichtung (209, 210) anfänglich auf den einen logischen Pegel und das dritte D-Flipflop (203) auf den anderen logischen Pegel gesetzt werden.

9. Vorrichtung nach einem der Ansprüche 7 oder 8, **dadurch gekennzeichnet, daß** das Alarmsignal (107) ein Signal ist, das im Alarmfall mindestens über eine bestimmte Zeitdauer konstant ist und das vom Ausgang zumindest eines D-Flipflops abgegriffen wird.

10. Vorrichtung nach Anspruch 9, **dadurch gekennzeichnet, daß** das Alarmsignal (107) aus den Ausgangssignalen der nach Maßgabe des Fehlersignals (105) getakteten D-Flipflops (202, 203) gebildet wird.

11. Vorrichtung nach einem der Ansprüche 3 bis 10, **dadurch gekennzeichnet, daß** das Fehlersignal (105) ein Signal ist, dessen Pegel sich auf das Eintreten des den Fehler anzeigenden Zustandes hin einmal ändert, wobei die nach Maßgabe des Fehlersignals getakteten D-Flipflops (202, 203) bei jeder Flanke des Fehlersignals getaktet werden.

12. Vorrichtung nach Anspruch 11, **gekennzeichnet durch** eine Impulsformschaltung (301 - 304), die das Fehlersignal (105) empfängt und auf jede seiner Flanken hin einen vorzugsweise im Vergleich zur Torzeit kurzen Impuls (414) als Taktsignal (207) für das zweite und das dritte D-Flipflop (202, 203) ausgibt.

13. Vorrichtung nach Anspruch 9, **gekennzeichnet durch** eine Beobachtungsschaltung (501), die das Alarmsignal (107) empfängt und bei Ausbleiben einer Pegeländerung während einer Zeitdauer, die länger als die bestimmte Zeitdauer ist, ein weiteres Alarmsignal (502) ausgibt.

14. Vorrichtung nach einem der Ansprüche 7 bis 10, **gekennzeichnet durch** ein viertes D-Flipflop (204), das zum Ende der Torzeit getaktet wird, dessen D-Eingang den Ausgang des dritten Flip-Flops (203) empfängt und dessen Ausgang (107b) zur Bildung des Alarmsignals (107c) mit dem Ausgang (107a) des zweiten D-Flipflops (202) EXOR-verknüpft wird.

15. Vorrichtung nach einem der Ansprüche 3 bis 14, **dadurch gekennzeichnet, daß** die Schaltung (101) und/oder die Fehlerüberwachungseinrichtung (104) digitale Schaltungen sind.

## Claims

1. Method for checking an error control unit in a circuit, wherein the error control unit generates an error signal (105) when it is operating properly if the digital circuit is in a state indicating an error,
**characterized by** the following steps:
invoking the state indicating the error,
checking the error signal (105), and
generating an alarm signal (107) when the error signal (105) does not appear or appears incorrectly;
wherein the state indicating the error is induced within a gate time, the error signal (105) is checked within the gate time, and the alarm signal (107) is generated if the error signal (105) does not appear or appears incorrectly within the gate time.

2. Device for checking an error control unit (104) of a circuit (101), wherein the error control unit (104) generates an error signal (105) when it is operating properly if the circuit (101) is in or outputs a state indicating an error,
**characterized by** the following components:
a device for inducing a state indicating an error (103), and
a device (106) for checking the error signal (105) after a state indicating the error was induced, and for generating an alarm signal (107) if the error signal (105) does not appear or appears incorrectly after the state indicating the error was induced,
wherein the checking device (106) checks the error signal (105) within a gate time, within which the state indicating the error is induced, and generates the alarm signal (107) if the error signal does not appear or appears incorrectly within the gate time.

3. Device according to Claim 2, **characterized by** a digital gate time signal (206), whose one state indicates the gate time.

4. Device according to Claim 3, **characterized by** a digital gate time signal (206), one state of which indicates a gate time, within which the state indicating the error is induced, wherein the monitoring device (106) monitors the error signal (105) within the gate time and generates the alarm signal (107) if the error signal does not appear or appears incorrectly within the gate time.

5. Device according to Claim 4, **characterized by** a ring circuit (208) of several D-flip-flops (201-203) that are clocked by gate time signals (206) or by a signal according to the error signal (207).

6. Device according to Claim 5, **characterized by** an initialization device (209, 210) which initially sets the output of a D-flip-flop (201-203) in the ring circuit (201-203) in such a way that not all D-flip-flops in the ring circuit adopt the same digital state (1 or 0).

7. Device according to Claim 5 or 6, **characterized in that** three D-flip-flops (201-203) are interconnected in a ring, with a first (201) being clocked according to the gate time signal (206) and a second (202) and a third (203) according to the error signal (105).

8. Device according to Claim 7, **characterized in that** at the beginning the initialization device (209, 210) sets the first and second D-flip-flop (201, 202) to one logical state and the third D-flip-flop (203) to the other logical state.

9. Device according to one of the Claims 7 or 8, **characterized in that** the alarm signal (107) is a signal that remains constant for at least a certain period of time in the case of an alarm and is picked up at the output of at least one D-flip-flop.

10. Device according to Claim 9, **characterized in that** the alarm signal (107) is formed from the output signals of the D-flip-flops (202, 203) that are clocked according to the error signal (105).

11. Device according to any one of the Claims 3 to 10, **characterized in that** the error signal (105) is a signal whose state changes one time when the state indicating the error occurs, with the D-flip-flops (202, 203) that are clocked according to the error signal being clocked at every edge of the error signal.

12. Device according to Claim 11, **characterized by** a pulse-forming circuit (301-304) that receives the error signal (105) and outputs a - preferably - short pulse (414) compared to the gate time as a clock signal (207) for the second and third D-flip-flop (202, 203) whenever an edge appears.

13. Device according to Claim 9, **characterized by** a monitoring circuit (501) that receives the alarm signal (107) and outputs another alarm signal (502) when no state change occurs within a period of time that is longer than the specified period of time.

14. Device according to one of the Claims 7 to 10, **characterized by** a fourth D-flip-flop (204) that is clocked towards the end of the gate time and whose D-input receives the output of the third flip-flop (203) and whose output (107b) is EXOR-connected with the output (107a) of the second D-flip-flop (202) to form the alarm signal (107c).

15. Device according to one of the Claims 3 to 14, **characterized in that** the circuit (101) and/or the error control unit (104) are digital circuits.

## Revendications

1. Procédé de contrôle d'une surveillance d'erreur dans un circuit, la surveillance d'erreur délivrant un signal d'erreur (105), en cas de fonctionnement convenable de sa part, lorsque le circuit numérique prend un état indiquant une erreur,
**caractérisé par** les opérations consistant
- à provoquer l'état indiquant l'erreur,
- à contrôler le signal d'erreur (105) et
- à produire un signal d'alarme (107) lorsque le signal d'erreur (105) n'apparaît pas ou n'apparaît pas d'une manière convenable,
- l'état indiquant l'erreur étant provoqué dans les limites d'un temps de porte, le signal d'erreur (105) étant contrôlé dans les limites du temps de porte et le signal d'alarme (107) étant produit lorsque le signal d'erreur (105) n'apparaît pas ou n'apparaît pas d'une manière convenable dans les limites du temps de porte.

2. Dispositif de contrôle d'un dispositif de surveillance d'erreur (104) d'un circuit (101), le dispositif de surveillance d'erreur (104) délivrant un signal d'erreur (105), en cas de fonctionnement convenable de sa part, lorsque le circuit (101) prend ou délivre un état indiquant une erreur,
**caractérisé par** les composants suivants :
- un dispositif (103) servant à provoquer un état indiquant une erreur, et
- un dispositif (106) servant à contrôler le signal d'erreur (105), une fois qu'un état indiquant l'erreur a été provoqué, et servant à produire un signal d'alarme (107) lorsque le signal d'erreur (105) n'apparaît pas ou n'apparaît pas d'une manière convenable lorsque l'état indiquant l'erreur est provoqué,
- le dispositif de contrôle (106) contrôlant le signal d'erreur (105) dans les limites d'un temps de porte, dans les limites duquel l'état indiquant l'erreur est provoqué, et produisant le signal d'alarme (107) lorsque le signal d'erreur n'apparaît pas ou n'apparaît pas d'une manière convenable dans les limites du temps de porte.

3. Dispositif suivant la revendication 2, **caractérisé par** un signal numérique de temps de porte (206) dont un état indique le temps de porte.

4. Dispositif suivant la revendication 3, **caractérisé par** un signal numérique de temps de porte (206) dont un état indique le temps de porte dans les limites duquel l'état indiquant l'erreur est provoqué, le dispositif de contrôle (106) contrôlant le signal d'erreur (105) dans les limites du temps de porte et produisant le signal d'alarme (107) lorsque le signal d'erreur n'apparaît pas ou n'apparaît pas d'une manière convenable dans les limites du temps de porte.

5. Dispositif suivant la revendication 4, **caractérisé par** une connexion annulaire en circuit (208) de plusieurs bascules-D (201 - 203) qui sont déclenchées au moyen de signaux de temps de porte (206), ou au moyen d'un signal conformément au signal d'erreur (207).

6. Dispositif suivant la revendication 5, **caractérisé par** un dispositif d'initialisation (209, 210) qui met chaque fois initialement la sortie d'une bascule-D de la connexion annulaire en circuit (201 - 203) de sorte que toutes les bascules-D du circuit annulaire n'ont pas le même niveau numérique (1 ou 0).

7. Dispositif suivant la revendication 5 ou 6, **caractérisé en ce que** trois bascules-D (201 - 203) sont connectées d'une manière annulaire, une première (201) de celles-ci étant déclenchée conformément au signal de temps de porte (206), et une deuxième (202) et une troisième (203) de celles-ci étant déclenchées conformément au signal d'erreur (105).

8. Dispositif suivant la revendication 7, **caractérisé en ce qu'**au moyen du dispositif d'initialisation (209, 210), la première et la deuxième bascules-D (201, 202) sont mises initialement à un premier niveau logique et la troisième bascule-D (203) est mise à l'autre niveau logique.

9. Dispositif suivant l'une des revendications 7 ou 8, **caractérisé en ce que** le signal d'alarme (107) est un signal qui, dans le cas d'alarme, est constant au moins sur l'étendue d'une durée déterminée et est prélevé sur la sortie d'au moins une bascule-D.

10. Dispositif suivant la revendication 9, **caractérisé en ce que** le signal d'alarme (107) est formé par les signaux de sortie des bascules (202, 203) déclenchées conformément au signal d'erreur (105).

11. Dispositif suivant l'une des revendications 3 à 10, **caractérisé en ce que** le signal d'erreur (105) est un signal dont le niveau change une fois lors de l'apparition de l'état indiquant l'erreur, les bascules-D (202, 203) déclenchées conformément au signal d'erreur étant déclenchée à chaque flanc du signal d'erreur.

12. Dispositif suivant la revendication 11, **caractérisé par** un circuit de forme d'onde d'impulsion (301 - 304) qui reçoit le signal d'erreur (105) et qui, à chacun de ses flancs, délivre une impulsion (414), de préférence courte en comparaison du temps de porte, en tant que signal de déclenchement (207) pour la deuxième et la troisième bascules-D (202, 203).

13. Dispositif suivant la revendication 9, **caractérisé par** un circuit d'observation (501) qui reçoit le signal d'alarme (107) et qui délivre un autre signal d'alarme (502) lorsqu'il ne se présente pas de changement de niveau pendant une durée qui est plus longue que la durée déterminée.

14. Dispositif suivant l'une des revendications 7 à 10, **caractérisé par** une quatrième bascule-D (204) qui est déclenchée à la fin du temps de porte, dont l'entrée-D reçoit la sortie de la troisième bascule (203) et dont la sortie (107b) fait l'objet d'une combinaison logique OU-exclusif avec la sortie (107a) de la deuxième bascule-D (202) en vue de la formation du signal d'alarme (107c).

15. Dispositif suivant l'une des revendications 3 à 14, **caractérisé en ce que** le circuit (101) et/ou le dispositif de surveillance d'erreur (104) sont des circuits numériques.
